# EUROPEAN PATENT APPLICATION

(11) **EP 2 395 804 A2**
(43) Date of publication of application: **14.12.2011**
(21) Application number: 11155886.2
(22) Date of filing: 24.02.2011
(51) Int. Cl.: H04W 74/08

(54) **Information distribution system, fixed station, mobile station, and information distribution method**

(30) Priority: 09.06.2010 JP 2010132155
(71) Applicant: Hitachi Ltd., Tokyo 100-8280 (JP)
(72) Inventor: Himori, Yuki, Chiyoda-ku Tokyo 100-8220 (JP); Fukushima, Shinichiro, Chiyoda-ku Tokyo 100-8220 (JP); Hamada, Hiroyuki, Chiyoda-ku Tokyo 100-8220 (JP); Yamamoto, Masaaki, Chiyoda-ku Tokyo 100-8220 (JP); Yamazoe, Takanori, Chiyoda-ku Tokyo 100-8220 (JP)
(74) Representative: Calderbank, Thomas Roger

(57) **Abstract**

A plurality of masters continuously receives data through a specific channel to detect whether a slave exists nearby. On the other hand, the slave transmits data for a given period through the specific channel by a trigger specified by a user. A master near the slave receives the data transmitted by the slave and recognizes that the slave exists nearby. After the recognition of the slave, the master performs carrier senses on channels other than the specific channel and transmits data for a given period through a channel on which a carrier does not exist. After the transmission through the specific channel, the slave receives a plurality of channels other than the specific channel to receive the data transmitted by the master.

## Description

The present invention relates to an information distribution system, a fixed station, a mobile station, and an information distribution method, and in particular, relates to radio-signal-based information distribution system, fixed station, mobile station, and information distribution method.

Japanese Unexamined Patent Publication No. 2000-307506 discloses a technique in which a calling wireless device transmits data continuously and repeatedly for enough time for a called wireless device to search for a frequency by switching all radio frequencies and the called wireless device searches for a connection request signal from the calling wireless device while sequentially switching a plurality of radio frequencies.

In an active tag system according to the technique disclosed in Japanese Unexamined Patent Publication No. 2000-307506, a master does not know whether a slave exists near the master. For this reason, the master transmits data continuously or periodically through an arbitrary channel, irrespective of the presence or absence of a slave near the master. Therefore, the master transmits data continuously even if a slave does not exist near the master, so that there is a problem that it is not possible to use frequency effectively. The present invention may provide an information distribution system that uses frequency effectively.

A plurality of masters continuously receives data through a specific channel to detect whether a slave exists nearby. On the other hand, the slave transmits data for a given period through the specific channel by a trigger specified by a user. A master near the slave receives the data transmitted by the slave and recognizes that the slave exists nearby. After the recognition of the slave, the master performs carrier senses on channels other than the specific channel and transmits data for a given period through a channel on which a carrier does not exist. After the transmission through the specific channel, the slave receives a plurality of channels other than the specific channel to receive the data transmitted by the master.

The present invention may provide an information distribution system in which communication is performed through of an upstream channel and any one of a plurality of downstream channels, the information distribution system including a fixed station which waits for a transmission signal from a mobile station through the upstream channel, selects a downstream transmission channel from among the downstream channels upon receiving the transmission signal, and transmits downstream information through the downstream transmission channel, and the mobile station which transmits the transmission signal through the upstream channel, detects the downstream transmission channel while switching the downstream channels, and receives the downstream information.

Further, the invention may provide a fixed station which waits for an unmodulated signal from a mobile station through an upstream channel, selects a downstream transmission channel from among a plurality of downstream channels upon receiving the transmission signal, and transmits downstream information through the downstream transmission channel.

Furthermore, the invention may provide a mobile station which transmits a transmission signal through an upstream channel, detects a downstream transmission channel while switching a plurality of downstream channels, and receives downstream information.

The invention may also provide an information distribution method in an information distribution system which includes a fixed station and a mobile station and in which communication is performed through an upstream channel and any one of a plurality of downstream channels, the information distribution method including the steps of, by the fixed station, waiting for a transmission signal from the mobile station through the upstream channel, selecting a downstream transmission channel from among the downstream channels upon receiving the transmission signal, and transmitting downstream information through the downstream transmission channel, and by the mobile station, transmitting the transmission signal through the upstream channel, detecting the downstream transmission channel while switching the downstream channels, and receiving the downstream information.

Further, the invention may provide an information distribution method by a fixed station in an information distribution system which includes the fixed station and a mobile station and in which communication is performed through an upstream channel and any one of a plurality of downstream channels, the information distribution method including the steps of waiting for an unmodulated signal from the mobile station through the upstream channel, selecting a downstream transmission channel from among the downstream channels upon receiving the transmission signal, and transmitting downstream information through the downstream transmission channel.

Furthermore, the invention may provide an information distribution method by a mobile station in an information distribution system which includes a fixed station and the mobile station and in which communication is performed through an upstream channel and any one of a plurality of downstream channels, the information distribution method including the steps of transmitting a transmission signal through the upstream channel, detecting a downstream transmission channel while switching the downstream channels, and receiving downstream information.

According to the present invention, since a fixed station does not transmit data unless a mobile station exists nearby, it may be possible to use frequency effectively and save the power of the fixed station.

Preferred embodiments of the present invention will now be described in conjunction with the accompanying drawings, in which;
FIG. 1 is a block diagram illustrating the configuration of an active tag system;
FIG. 2 is a functional block diagram of a master;
FIG. 3 is a functional block diagram of a slave;
FIG. 4 is a diagram illustrating a communication flow;
FIG. 5 is a process flowchart of the master;
FIG. 6 is a process flowchart of the slave;
FIG. 7 is a diagram illustrating another communication flow;
FIG. 8 is another process flowchart of the master;
FIG. 9 is another process flowchart of the slave;
FIG. 10 is a block diagram of an active tag system;
FIG. 11 is yet another process flowchart of the master; and
FIG. 12 is a block diagram of another active tag system.

Hereinafter, embodiments will be described in detail with reference to the accompanying drawings. In all the drawings for illustrating the embodiments, the same components are basically denoted by the same reference numerals, and their description will not be repeated.

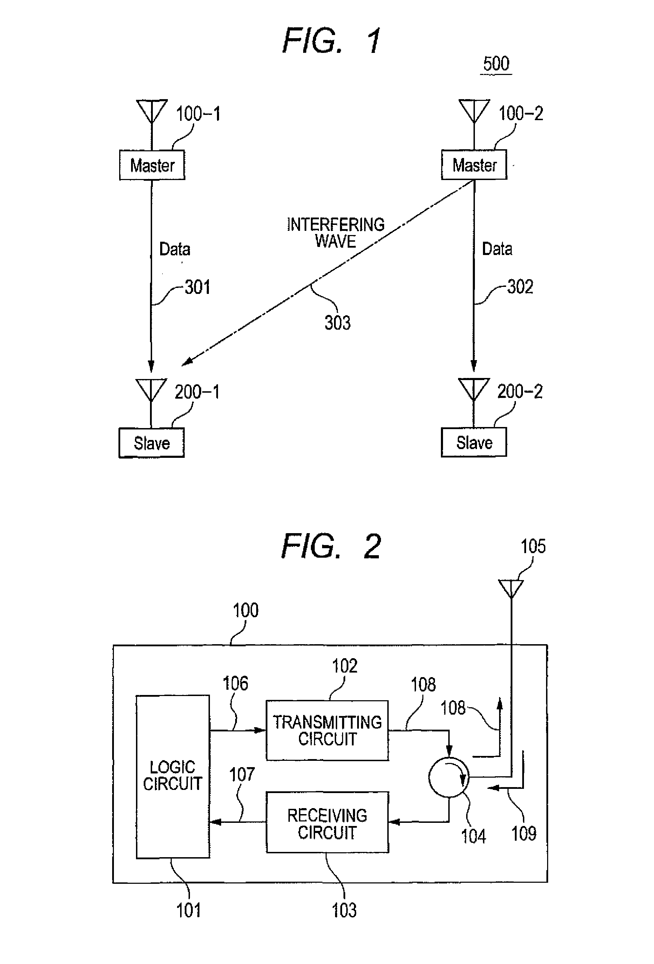

Referring to FIG. 1, the configuration of an active tag system 500 will be described. In FIG. 1, the active tag system 500 includes one or more masters 100 and one or more slaves 200. In the communication procedure, a slave 200-1 receives data 301 transmitted by a master 100-1, and a slave 200-2 receives data 302 transmitted by a master 100-2.

Therefore, in the case where the master 100-1 and the master 100-2 are disposed close to each other, the slave 200-1 receives the data 301 transmitted by the master 100-1 and receives an interfering wave 303 transmitted by the master 100-2. Accordingly, the interfering wave 303 may cause the slave 200-1 to make an error in receiving the data 301. For this reason, as typical measures against the interfering wave, the master 100-1 and the master 100-2 use different carrier frequencies (hereinafter referred to as channels), thus preventing communication interference. In this case, the slave 200-1 needs to search for a channel of transmission by the master 100-1 among a plurality of channels (e.g., six channels in all), to receive the data 301.

Referring to FIG. 2, the configuration of the master 100 will be described. In FIG. 2, the master 100 includes a logic circuit 101, a transmitting circuit 102, a receiving circuit 103, a circulator 104, and an antenna 105.

The logic circuit 101 generates a transmission signal 106 in accordance with a communication procedure stored beforehand. Further, the logic circuit 101 analyzes a reception signal 107. The transmitting circuit 102 converts the transmission signal 106 into a high-frequency transmission signal 108. The high-frequency transmission signal 108 is a modulated wave or an unmodulated wave (continuous wave). The receiving circuit 103 demodulates a high-frequency reception signal 109 into the reception signal 107. Further, the receiving circuit 103 detects an electric power value of the high-frequency reception signal 109. Furthermore, the receiving circuit 103 performs a carrier sense.

The circulator 104 prevents the inflow of the high-frequency transmission signal 108 into the receiving circuit. Further, the circulator 104 transmits the high-frequency transmission signal 108 to the antenna 105. Furthermore, the circulator 104 transmits the high-frequency reception signal 109 to the receiving circuit. The antenna 105 transmits the high-frequency transmission signal 108 into the air. Further, the antenna 105 receives the high-frequency reception signal 109 from the air.

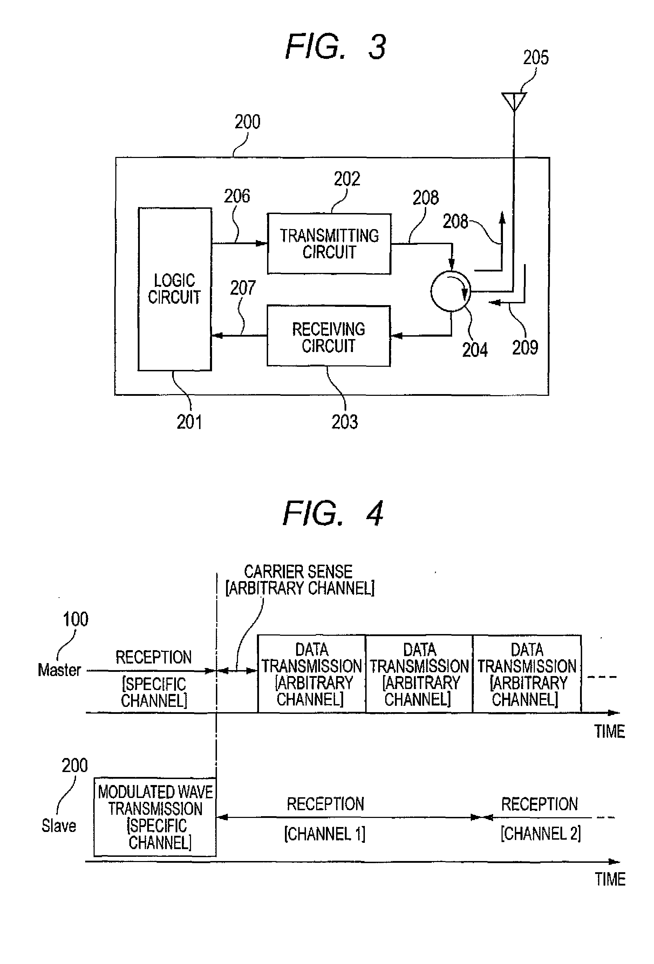

Referring to FIG. 3, the configuration of the slave 200 will be described. In FIG. 3, the slave 200 includes a logic circuit 201, a transmitting circuit 202, a receiving circuit 203, a circulator 204, and an antenna 205.

The logic circuit 201 generates a transmission signal 206 in accordance with a communication procedure stored beforehand. Further, the logic circuit 201 analyzes a reception signal 207. The transmitting circuit 202 converts the transmission signal 206 into a high-frequency transmission signal 208. The high-frequency transmission signal 208 is a modulated wave or an unmodulated wave (continuous wave). The receiving circuit 203 demodulates a high-frequency reception signal 209 into the reception signal 207. Further, the receiving circuit 203 detects an electric power value of the high-frequency reception signal 209. Furthermore, the receiving circuit 203 performs a carrier sense.

The circulator 204 prevents the inflow of the high-frequency transmission signal 208 into the receiving circuit. Further, the circulator 204 transmits the high-frequency transmission signal 208 to the antenna 205. Furthermore, the circulator 204 transmits the high-frequency reception signal 209 to the receiving circuit. The antenna 205 transmits the high-frequency transmission signal 208 into the air. Further, the antenna 205 receives the high-frequency reception signal 209 from the air.

Further, the slave 200 includes an input unit and an output unit (not shown). When the input unit receives an operation by a user, the slave 200 transmits a modulated wave or a continuous wave on a specific channel. The output unit displays data received from the master 100.

### First Embodiment

The first embodiment will be described with reference to FIGS. 4 to 6. In the first embodiment, all the slaves 200 use a modulated wave on an upstream channel (Channel (Ch) 6 in this embodiment) to inform the masters 100 of a communication start. All the masters 100 monitor Ch 6 all the time.

Referring to FIG. 4, a communication procedure between the master 100 and the slave 200 will be described. In FIG. 4, the master 100 that has received a modulated wave on Ch 6 from the slave 200 performs a carrier sense on a channel selected from among a plurality of downstream channels (e.g., Chs 1 to 5). The master 100 starts data transmission through a channel (Ch 1 in this embodiment) on which the master 100 has not received a carrier.

On the other hand, the slave 200 sequentially receives (performs channel scans on) Chs 1 to 5 after transmitting the modulated wave. The slave 200 receives a signal from the master 100 through Ch 1.

According to the first embodiment, the master 100 starts data transmission in response to a modulated wave, and therefore does not have to transmit data continuously or periodically.

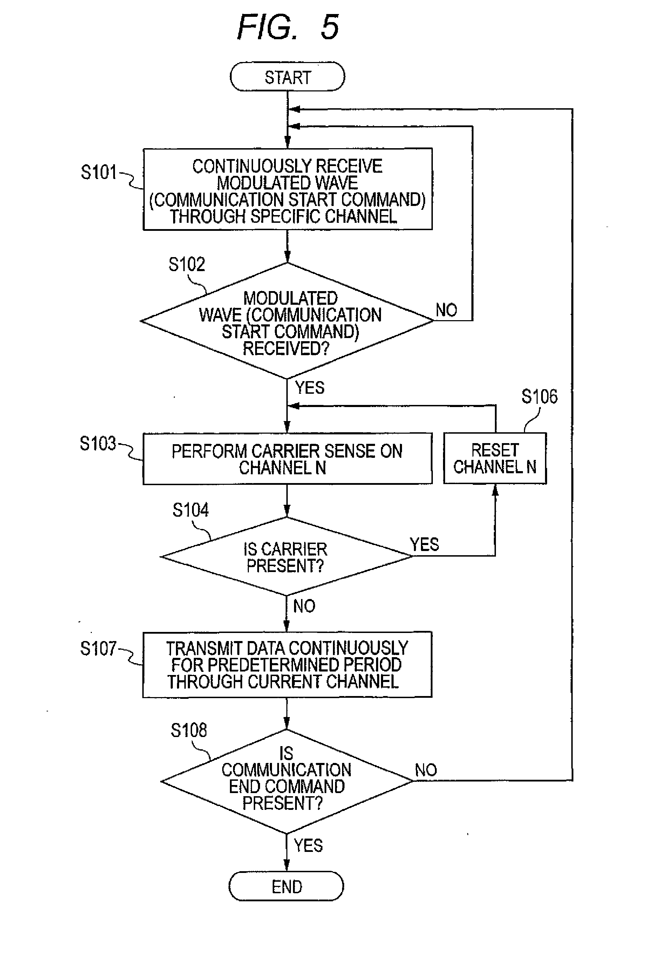

Referring to FIG. 5, the operation flow of the master 100 will be described. In FIG. 5, the master 100 continuously receives a modulated wave (communication start command) through a specific channel (Ch 6 in this embodiment) (S101). The master 100 waits for a modulated wave (communication start command) (S102). If YES in step 102, the master 100 performs a carrier sense on channel N selected from among a plurality of downstream channels (S103). The master 100 determines whether a carrier is present (S104). If YES, the master 100 resets channel N (S106), and the flow returns to step 103. The resetting of channel N signifies changing to a different channel or resetting to the same channel.

If NO in step 104, the master 100 transmits data continuously for a predetermined period through the channel (current channel) on which the carrier sense has been performed (S107). The master 100 determines whether a communication end command is present (S108). If YES in step 108, the flow ends. If NO in step 108, the flow returns to step 101.

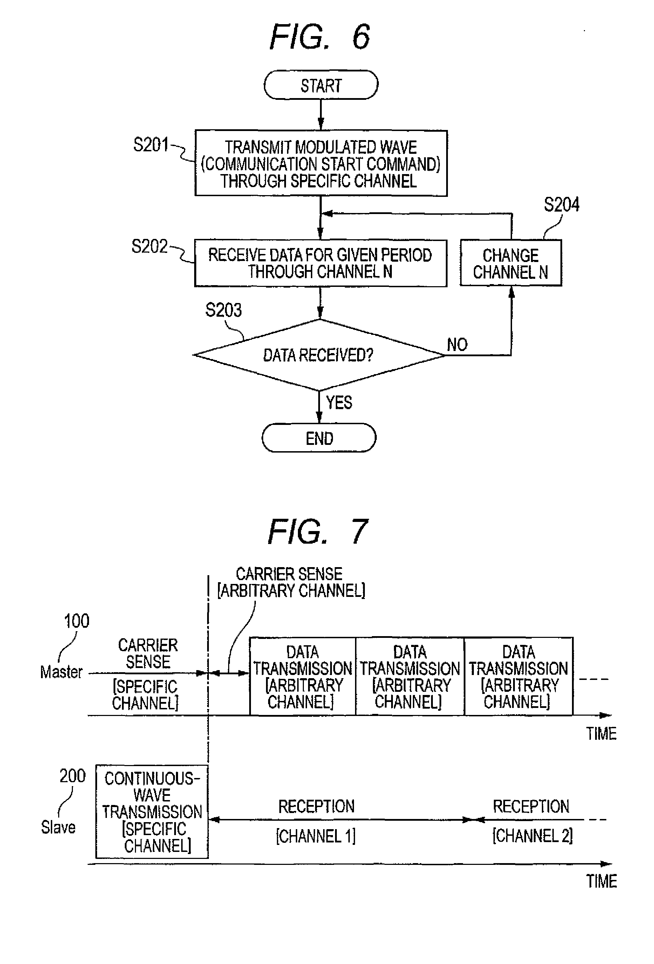

Referring to FIG. 6, the operation flow of the slave 200 will be described. In FIG. 6, the slave 200 transmits the modulated wave (communication start command) through the specific channel (Ch 6 in this embodiment) (S201). The slave 200 receives data for a given period through channel N selected from among a plurality of downstream channels (S202). The data reception period may be set to, for example, more than twice the transmission data length of the master 100. Then, the slave 200 determines whether it has received data (S203). If YES in step 203, the flow ends. If NO in step 203, the slave 200 changes channel N (S204), and the flow returns to step 202.

### Second Embodiment

The second embodiment will be described with reference to FIGS. 7 to 9. In the second embodiment, the slave 200 transmits an unmodulated wave (CW: continuous wave) to inform the master 100 of a communication start. The CW enables the master 100 to receive CWs in collision from a plurality of slaves 200.

Referring to FIG. 7, a communication procedure between the master 100 and the slave 200 will be described. In FIG. 7, the master 100 that has received a continuous wave on an upstream channel (Ch 6 in this embodiment) from the slave 200 performs a carrier sense on a channel selected from among a plurality of downstream channels (Chs 1 to 5 in this embodiment). The master 100 starts data transmission through a channel (Ch 1 in this embodiment) on which the master 100 has not received a carrier.

On the other hand, the slave 200 sequentially receives (performs channel scans on) Chs 1 to 5 after transmitting the continuous wave. The slave 200 receives a signal from the master 100 through Ch 1.

According to the second embodiment, the master 100 starts data transmission in response to a continuous wave, and therefore does not have to transmit data continuously or periodically. Further, the master 100 can receive CWs in collision from a plurality of slaves 200. Therefore, the master 100 can transmit data to two or more slaves 200 simultaneously.

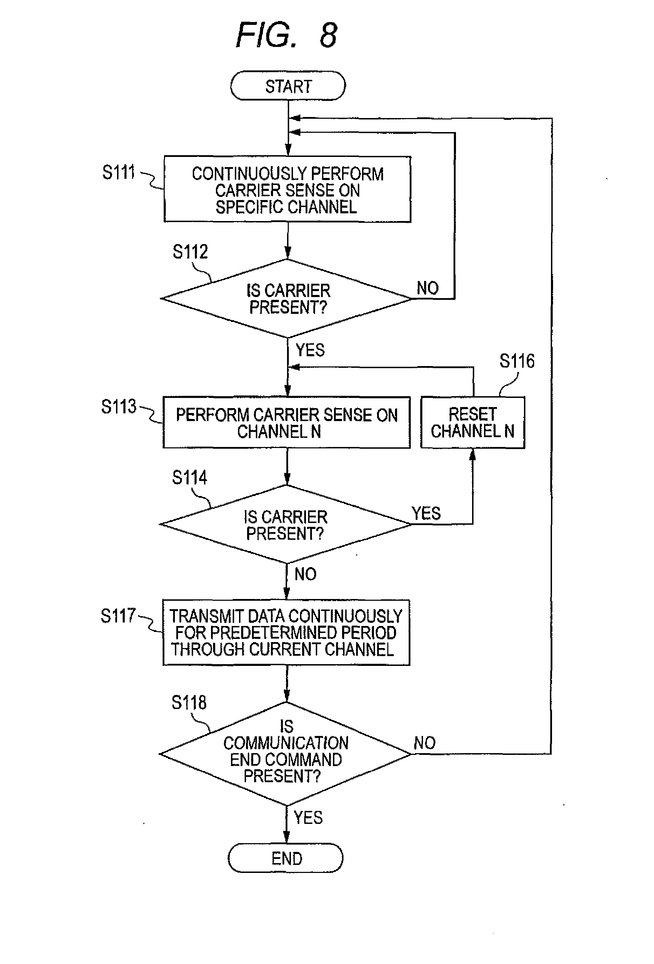

Referring to FIG. 8, the process flow of the master 100 will be described. In FIG. 8, the master 100 continuously performs a carrier sense on a specific channel (Ch 6 in this embodiment) (S111). The master 100 waits for a carrier (S112). If YES in step 112, the master 100 performs a carrier sense on channel N selected from among a plurality of downstream channels (S113). The master 100 determines whether a carrier is present (S114). If YES, the master 100 resets channel N (S116), and the flow returns to step 113. The resetting of channel N signifies changing to a different channel or resetting to the same channel.

If NO in step 114, the master 100 transmits data continuously for a predetermined period through the channel (current channel) on which the carrier sense has been performed (S117). The master 100 determines whether a communication end command is present (S118). If YES in step 118, the flow ends. If NO in step 118, the flow returns to step 111.

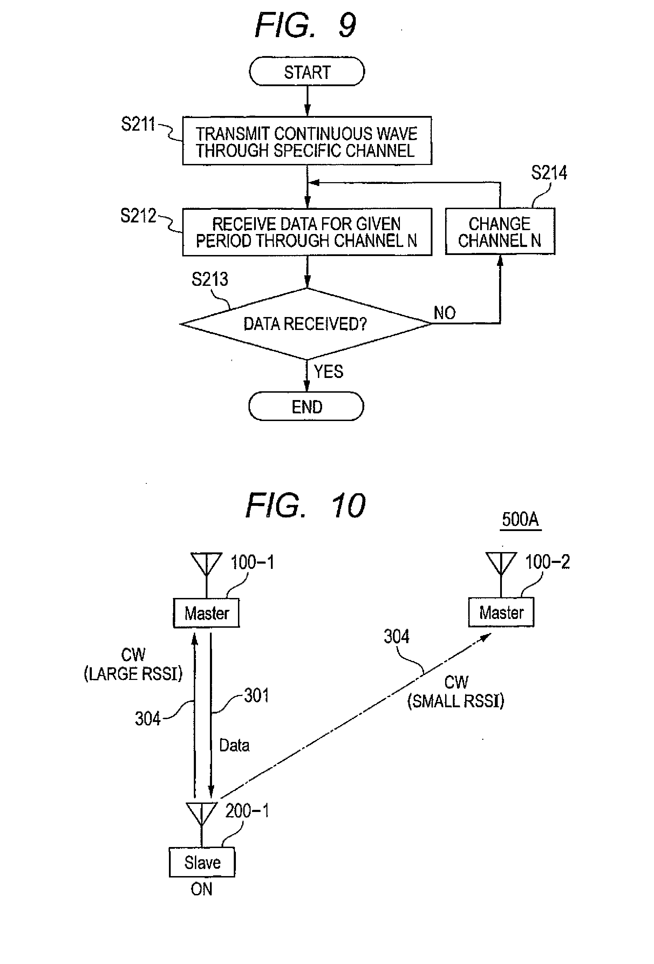

Referring to FIG. 9, the process flow of the slave 200 will be described. In FIG. 9, the slave 200 transmits the continuous wave through the specific channel (Ch 6 in this embodiment) (S211). The slave 200 receives data for a given period through channel N selected from among a plurality of downstream channels (S212). The data reception period may be set to, for example, more than twice the transmission data length of the master 100. Then, the slave 200 determines whether it has received data (S213). If YES in step 213, the flow ends. If NO in step 213, the slave 200 changes channel N (S214), and the flow returns to step 212.

According to the second embodiment, the master 100 starts data transmission in response to a CW, and therefore does not have to transmit data continuously or periodically. Further, the master 100 can receive CWs in collision from a plurality of slaves 200.

### Third Embodiment

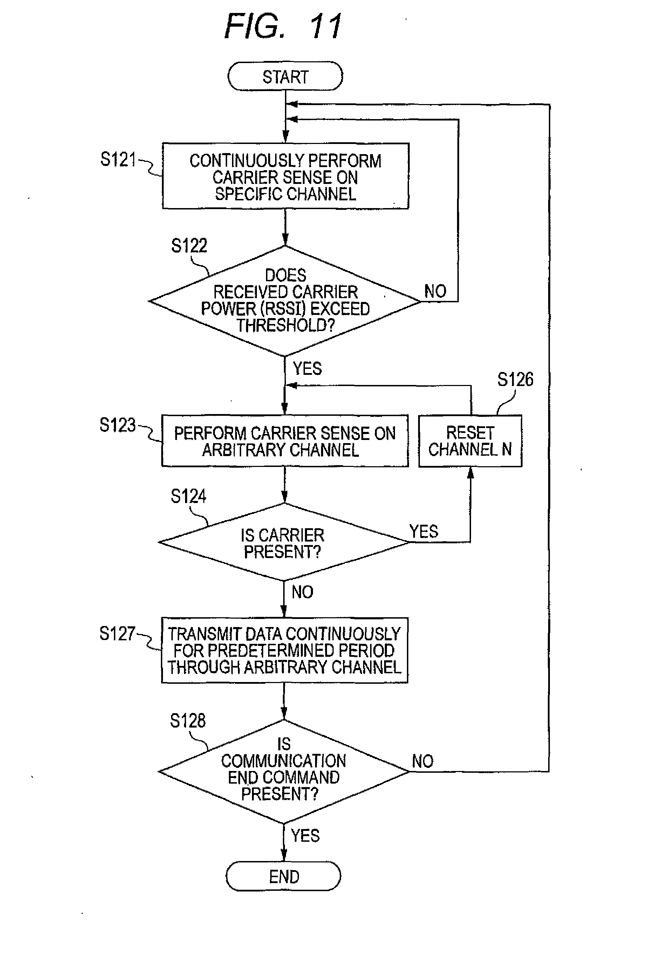

The third embodiment will be described with reference to FIGS. 10 and 11. In the third embodiment, the slave 200 transmits a continuous wave (CW) to inform the master 100 of a communication start. The master 100 determines, based on the receive signal strength indication (RSSI) of the CW, whether the slave 200 that has transmitted the CW exists nearby.

Referring to FIG. 10, the configuration of an active tag system 500A composed of two masters 100 and one slave 200 will be described. In FIG. 10, the master 100-1 and the master 100-2 are adjacent to each other. Assume that the slave 200-1 transmits a continuous wave 304 near the master 100-1. The RSSI of the continuous wave, which the master 100 receives, attenuates in proportion to the square of the distance from the slave 200-1. Therefore, the RSSI of the continuous wave received by the master 100-1 is greater than that of the master 100-2. Accordingly, if the master 100 has an RSSI threshold according to the distances to the master 100-1 and the master 100-2, the master 100 can communicate with only the nearby slave 200.

Referring to FIG. 11, processing by the master 100 will be described. In FIG. 11, the master 100 continuously performs a carrier sense on a specific channel (Ch 6 in this embodiment) (S121). The master 100 waits for received carrier power exceeding the threshold (S122). If YES in step 122, the master 100 performs a carrier sense on channel N selected from among a plurality of downstream channels (S123). The master 100 determines whether a carrier is present (S124). If YES, the master 100 resets channel N (S126), and the flow returns to step 123. The resetting of channel N signifies changing to a different channel or resetting to the same channel.

If NO in step 124, the master 100 transmits data continuously for a predetermined period through the channel (current channel) on which the carrier sense has been performed (S127). The master 100 determines whether a communication end command is present (S128). If YES in step 128, the flow ends. If NO in step 128, the flow returns to step 121.

The master according to the second embodiment may start communication in response to a continuous wave from a distant slave. However, due to the RSSI function, the master according to the third embodiment starts communication in response to only a continuous wave from a nearby slave.

### Fourth Embodiment

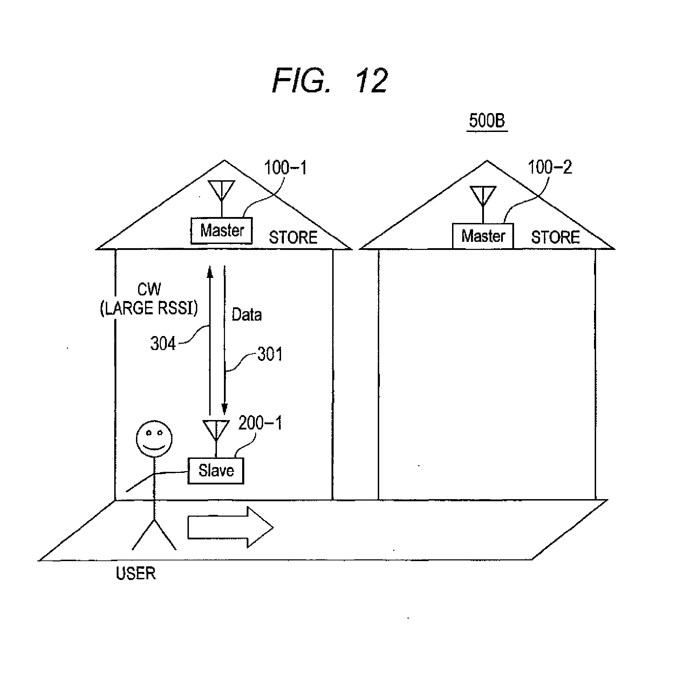

The fourth embodiment will be described with reference to FIG. 12. In the fourth embodiment, the masters 100 in an active tag system 500B are installed in the respective stores. The slave 200 is incorporated in a cellular phone unit, a PDA, and the like, and position information, coupon information of the store, and the like are displayed through the display thereof. When a user of the cellular phone or the like moves with the cellular phone and operates the cellular phone near the master 100-1 installed in a store, the user can obtain position information, coupon information of the store, and the like. Further, when the user approaches the master 100-2 installed in another store, the user can obtain different position information and coupon information of the store.

According to the fourth embodiment, it is possible to provide an information distribution system for presenting information about featured products, etc. to a customer even if the customer does not enter the store.

## Claims

1. An information distribution system in which communication is performed through an upstream channel and any one of a plurality of downstream channels, the information distribution system comprising:
a fixed station which waits for a transmission signal from a mobile station through the upstream channel, selects a downstream transmission channel from among the downstream channels upon receiving the transmission signal, and transmits downstream information through the downstream transmission channel; and
the mobile station which transmits the transmission signal through the upstream channel, detects the downstream transmission channel while switching the downstream channels, and receives the downstream information.

2. The information distribution system according to claim 1, wherein the transmission signal is an unmodulated signal.

3. The information distribution system according to claim 2, wherein the fixed station measures a receive signal strength indication of the unmodulated signal, and transmits the downstream information if the receive signal strength indication is greater than a predetermined threshold.

4. A fixed station in an information distribution system which includes the fixed station and a mobile station and in which communication is performed through an upstream channel and any one of a plurality of downstream channels, wherein the fixed station waits for an unmodulated signal from the mobile station through the upstream channel, selects a downstream transmission channel from among the downstream channels upon receiving the transmission signal, and transmits downstream information through the downstream transmission channel.

5. The fixed station according to claim 4, wherein the fixed station measures a receive signal strength indication of the unmodulated signal, and transmits the downstream information if the receive signal strength indication is greater than a predetermined threshold.

6. A mobile station in an information distribution system which includes a fixed station and the mobile station and in which communication is performed through an upstream channel and any one of a plurality of downstream channels, wherein the mobile station transmits a transmission signal through the upstream channel, detects a downstream transmission channel while switching the downstream channels, and receives downstream information.

7. The mobile station according to claim 6, wherein the transmission signal is an unmodulated signal.

8. An information distribution method in an information distribution system which includes a fixed station and a mobile station and in which communication is performed through an upstream channel and any one of a plurality of downstream channels, the information distribution method comprising the steps of:
by the fixed station,
waiting for a transmission signal from the mobile station through the upstream channel;
selecting a downstream transmission channel from among the downstream channels upon receiving the transmission signal; and
transmitting downstream information through the downstream transmission channel; and
by the mobile station,
transmitting the transmission signal through the upstream channel;
detecting the downstream transmission channel while switching the downstream channels; and
receiving the downstream information.

9. The information distribution method according to claim 8, wherein the transmission signal is an unmodulated signal.

10. The information distribution method according to claim 9, further comprising the steps of:
by the fixed station,
measuring a receive signal strength indication of the unmodulated signal; and
transmitting the downstream information if the receive signal strength indication is greater than a predetermined threshold.

11. An information distribution method by a fixed station in an information distribution system which includes the fixed station and a mobile station and in which communication is performed through an upstream channel and any one of a plurality of downstream channels, the information distribution method comprising the steps of:
waiting for an unmodulated signal from the mobile station through the upstream channel;
selecting a downstream transmission channel from among the downstream channels upon receiving the transmission signal; and
transmitting downstream information through the downstream transmission channel.

12. The information distribution method according to claim 11, further comprising the steps of:
measuring a receive signal strength indication of the unmodulated signal; and
transmitting the downstream information if the receive signal strength indication is greater than a predetermined threshold.

13. An information distribution method by a mobile station in an information distribution system which includes a fixed station and the mobile station and in which communication is performed through an upstream channel and any one of a plurality of downstream channels, the information distribution method comprising the steps of:
transmitting a transmission signal through the upstream channel;
detecting a downstream transmission channel while switching the downstream channels; and
receiving downstream information.

14. The information distribution method according to claim 13, wherein the transmission signal is an unmodulated signal.
